# EUROPÄISCHE PATENTSCHRIFT

(11) **EP 4 168 240 B1**
(45) Veröffentlichungstag und Bekanntmachung des Hinweises auf die Patenterteilung: **13.11.2024**
(21) Anmeldenummer: 21734830.9
(22) Anmeldetag: 21.06.2021
(51) Int. Cl.: B29C 49/66, B29C 49/12, B29C 49/06, B29C 49/02

(54) **VERFAHREN UND VORRICHTUNG ZUM HERSTELLEN VON BEHÄLTERN AUS THERMISCH KONDITIONIERTEN VORFORMLINGEN AUS THERMOPLASTISCHEM MATERIAL**
METHOD AND DEVICE FOR PRODUCING CONTAINERS FROM TEMPERATURE CONTROLLED PREFORMS MADE OF THERMOPLASTIC MATERIAL
PROCÉDÉ ET DISPOSITIF DE PRODUCTION DE RÉCIPIENTS À PARTIR DE PRÉFORMES À TEMPÉRATURE RÉGULÉE EN MATIÈRE THERMOPLASTIQUE

(30) Priorität: 23.06.2020 DE 102020116537
(43) Veröffentlichungstag der Anmeldung: 26.04.2023
(73) Patentinhaber: KHS GmbH, 44143 Dortmund (DE)
(72) Erfinder: GROPMANN, David, 22047 Hamburg (DE); RASCH, Jens-Peter, 22927 Großhansdorf (DE); ROMMEL, Christian, 23617 Stockelsdorf (DE)
(74) Vertreter: Greiche, Albert
(86) Internationale Anmeldenummer: PCT/EP2021/066874
(87) Internationale Veröffentlichungsnummer: WO 2021/259873

(56) Entgegenhaltungen:
- WO-A1-2005/092594
- DE-U1- 202008 005 393
- US-A1- 2016 221 247

## Beschreibung

Die Erfindung betrifft ein Verfahren und eine Vorrichtung zum Herstellen von Behältern aus thermisch konditionierten Vorformlingen aus thermoplastischem Material.

Zur Herstellung von Behältern werden Vorformlinge verwendet, die aus thermoplastischem Material bestehen. Diese Vorformlinge werden zunächst thermisch konditioniert und dann mittels eines Streckblasprozesses in Formwerkzeugen zu Behältern geformt. Dabei wird unter anderem eine Reckstange in den Vorformling eingeführt, die den Vorformling entlang seiner Längsachse reckt. In axialer Richtung wird die Ausformung mittels eines Blasgases durchgeführt, mit dem der Vorformling innerhalb der Form expandiert wird, sodass der Vorformling an die Innenwände der Form gedrückt wird. Die Behälter weisen nach ihrer Ausformung noch Restwärme aus der thermischen Konditionierung der Vorformlinge auf. Durch diese Restwärme ist das Material der Behälter noch nicht stabil und die Behälter können ihre Form noch nicht halten. Daher werden die Formwerkzeuge bzw. die ausgeformten Behälter nach der Ausformung der Behälter gekühlt, um diese Restwärme aus dem Material der Behälter abzuleiten.

Zur Unterstützung der Ableitung der Restwärme ist aus EP 2 040 905 B1 bekannt, nach der Expansion des Vorformlings ein kühlendes Gas aus der Reckstange heraus in Richtung auf einen Boden des ausgeformten Behälters zu leiten. Das Gas kann dabei zum Beispiel Blasgas sein, das nach einem Senken des Drucks in den Behälter eingeleitet wird, um die Restwärme aus dem Material des Behälters aufzunehmen.

Aus DE 20 2008 005 393 U1 ist weiter bekannt, während der Ausformung des Behälters in einer Plateauphase des Drucks Druckschwankungen zu bewirken, um den Behälter zu kühlen.

Ferner ist aus US 2016/0221247 A1 bekannt, einen Vorformling mit gepulst eingeleitetem Fluid zu recken.

Aus WO 2005/092594 A1 ist bekannt, einen Behälter während des Spülens zu kühlen. Auch hier können Druckschwankungen auftreten.

Aufgabe der Erfindung ist es, ein Verfahren und eine Vorrichtung bereitzustellen, die ein weiter erhöhtes Kühlpotenzial und eine verbesserte Effizienz aufweisen.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einem Verfahren zum Herstellen von Behältern aus thermisch konditionierten Vorformlingen aus thermoplastischem Material, wobei ein Vorformling in einer Form angeordnet wird, mittels einer Reckstange und eines Blasgases, das in den Vorformling eingeleitet wird, gereckt wird, wobei nach dem Formen des Behälters sowie mit Beginn einer Reduktion des Drucks und/oder nach einer vordefinierten Zeitdauer nach dem Beginn der Reduktion des Drucks des im Behälter angeordneten Blasgases ein Boden des Behälters mittels eines Spülgases gekühlt wird, ist erfindungsgemäß vorgesehen, dass das Spülgas mit einer Vielzahl von getakteten Spülgaspulsen bei kontinuierlich abfallendem Druck in dem Behälter auf den Boden geleitet wird.

Mit der Erfindung wird das Spülgas in einzelnen voneinander getrennten Spülgaspulsen auf dem Boden des Behälters geleitet, wobei die Spülgaspulse erst dann eingeleitet werden, nachdem eine Reduktion des Drucks in dem hergestellten Behälter begonnen hat. D. h. die Spülgaspulse werden eingeleitet, während der Druck für die Herstellung des Behälters abgelassen wird. Bei der Einleitung des Spülgases in den Behälter expandiert das Spülgas adiabatisch, sodass die Temperatur des Spülgases sinkt. Der Behälter wird damit mittels des Spülgaspulses mit kaltem Spülgas gefüllt, das dann die Restwärme des Materials des hergestellten Behälters aufnehmen kann. Durch die Taktung der Pulse wird zwischen den Spülgaspulsen kein weiteres Spülgas in den Behälter geleitet. Dies bewirkt, dass weniger Spülgas verwendet wird als im Vergleich zu einem kontinuierlichen Spülgasstrom. Weiter bewirkt dies, dass zwischen den Spülgaspulsen ein sich aufbauender Druck in dem ausgeformten Behälter, der durch die Einleitung des Spülgases erhöht wird, wieder reduziert werden kann. Dazu kann zum Beispiel mittels eines geöffneten Auslassventils, das mit dem Spülgaspuls in den Behälter eingeleitete Spülgas kontrolliert ausgelassen werden. Alternativ oder zusätzlich kann ein Auslassventil dauerhaft geöffnet sein, während die Spülgaspulse getaktet in den Behälter eingeleitet werden. Auf diese Weise kann nach jedem Spülgaspuls automatisch eine Druckreduktion stattfinden. Diese Druckreduktion kann zum Beispiel durch einen Druckausgleich mit der Umgebung bewirkt werden. Die Druckdifferenz zwischen dem Innendruck des Behälters und den Spülgaspulsen ist damit zu Beginn jedes Spülgaspulses in Bezug auf den Druck des Spülgaspulses maximal, sodass die Temperaturreduktion bei der Expansion des Spülgases bei dessen Einleiten in den Behälter ebenfalls maximiert wird. Damit weist das Verfahren ein erhöhtes Kühlpotenzial und eine verbesserte Effizienz auf.

Das Spülgas kann zum Beispiel unter Druck durch mindestens einen Auslass geleitet werden, der auf den Boden gerichtet ist.

Die Spülgaspulse werden damit direkt in Richtung des Bodens des Behälters geleitet ohne Kühlpotential an anderen Teilen des Behälters zu verwenden. Dies erhöht die Effizienz weiter. Der Auslass kann zum Beispiel eine Expansionsdüse sein, das in Bezug auf den Auslass des Blasgases einen separaten Auslass für das Spülgas bereitstellt.

In einem Weiteren Beispiel kann der Druck des Spülgaspulses erhöht werden, um die Druckdifferenz und damit das Kühlpotential des expandierten Spülgases weiter zu erhöhen.

Denkbar ist beispielsweise weiter, dass das Spülgas das Blasgas ist.

Damit kann unmittelbar die Blasgasversorgung für die Kühlung des Behälters verwendet werden. Der mindestens eine Auslass kann dabei am Ende einer Abzweigung aus einer Blasgasleitung angeordnet sein.

Alternativ oder zusätzlich kann das Spülgas aus einem separaten Reservoir, wie zum Beispiel einer Gasflasche, entnommen werden.

Gemäß einem weiteren Beispiel kann die Reckstange den mindestens einen Auslass aufweisen und das Spülgas durch die Reckstange in den Behälter geleitet werden.

Der mindestens eine Auslass kann an dem Endstück der Reckstange nahe des Bodens des Behälters angeordnet sein. Dort kann beim Auslassen des Spülgases die Expansion des Kühlgases stattfinden. Dies erhöht das Kühlpotenzial des Spülgases weiter, da die Temperatur des Spülgases unmittelbar in dem Bereich reduziert wird, in dem das Spülgas eine Kühlung bewirken soll und kein Kühlpotential an anderen Bereichen des Behälters verwendet wird.

Weiter betrifft die Erfindung eine Vorrichtung zum Herstellen von Behältern aus thermisch konditionierten Vorformlingen aus thermoplastischem Material, wobei die Vorrichtung mindestens eine Form zum Formen des Behälters aus einem Vorformling, mindestens eine in die Form einführbare Reckstange zum Recken eines in die Form eingelegten Vorformlings, eine in den in der Form angeordneten Vorformling mündende Fluidleitung zum Einleiten eines Blasgases in den Vorformling und eine Kühleinheit zum Kühlen eines Bodens eines hergestellten Behälters mittels eines Spülgases mit Beginn einer Reduktion des Drucks und/oder nach einer vordefinierten Zeitdauer nach dem Beginn der Reduktion des Drucks des im Behälter angeordneten Blasgases aufweist, bei der erfindungsgemäß vorgesehen ist, dass die Kühleinheit zum Einleiten des Spülgases bei kontinuierlich abfallendem Druck in dem Behälter auf den Boden mittels einer Vielzahl von getakteten Spülgaspulsen ausgebildet ist.

Vorteile und Wirkungen sowie Weiterbildungen der Vorrichtung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen.

Gemäß einem Beispiel kann die Kühleinheit mindestens einen an der Form angeordneten Auslass für das Spülgas aufweisen, der auf den Boden gerichtet ist.

Die Spülgaspulse werden von der Kühleinheit damit direkt in Richtung des Bodens des Behälters geleitet, ohne Kühlwirkung an anderen Teilen des Behälters zu verwenden. Dies erhöht die Effizienz weiter. Der Auslass kann zum Beispiel eine an der Form angeordnetes Expansionsdüse sein, das in Bezug auf den Auslass des Blasgases einen separaten Auslass für das Spülgas bereitstellt.

Weiter kann das Spülgas beispielsweise das Blasgas sein.

Damit kann unmittelbar die Blasgasversorgung für die Kühlung des Behälters verwendet werden. Der mindestens eine Auslass kann dabei am Ende einer Abzweigung aus einer Blasgasleitung angeordnet sein.

Alternativ oder zusätzlich kann die Vorrichtung ein separates Reservoir für das Spülgas aufweisen, zum Beispiel eine Gasflasche. Das Reservoir ist dabei fluidkommunizierend mit dem Auslass verbunden.

Denkbar ist auch, dass die Reckstange zum Beispiel den mindestens einen Auslass aufweist und das Spülgas durch die Reckstange in den Behälter geleitet wird.

Der mindestens eine Auslass kann an dem Endstück der Reckstange nahe des Bodens des Behälters angeordnet sein dort kann dann beim Auslassen des Spülgases die Expansion des Kühlgases stattfinden. Dies erhöht das Kühlpotenzial des Spülgases weiter, da die Temperatur des Spülgases unmittelbar in dem Bereich reduziert wird, in dem das Spülgas eine Kühlung bewirken soll.

Im Folgenden wird die Erfindung anhand einer beispielhaften Ausführungsform mittels der beigefügten Zeichnung beschrieben. Es zeigen:
- Figur 1: eine schematische Darstellung einer Vorrichtung zum Herstellen von Behältern;
- Figur 2: eine schematische Querschnittsdarstellung der Form;
- Figur 3: ein Flussdiagramm des Verfahrens zum Herstellen von Behältern; und
- Figur 4: ein Druck-Zeit-Diagramm des Reckvorgangs des Behälters;
- Figur 5: ein Druck-Zeit-Diagramm des Verfahrens.

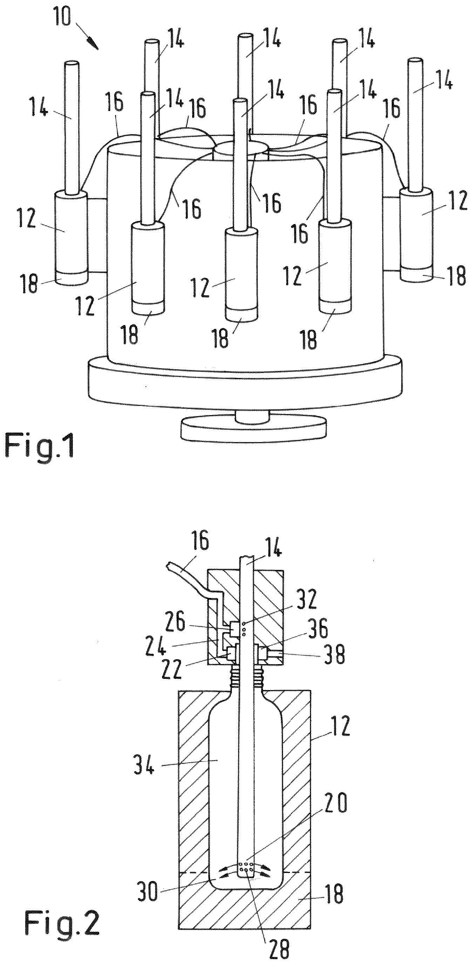

Bevor auf das Verfahren zum Herstellen von Behältern eingegangen wird, wird zunächst die Vorrichtung zum Herstellen von Behältern näher erläutert. Die Vorrichtung wird im Folgenden in ihrer Gesamtheit mit dem Bezugszeichen 10 bezeichnet, wie in Figur 1 dargestellt.

Die Vorrichtung 10 ist dazu ausgebildet, Behälter aus thermoplastischem Material herzustellen. Dazu werden zunächst Vorformlinge bereitgestellt, die thermisch konditioniert werden. Die Vorrichtung 10 weist für die Herstellung der Behälter mindestens eine Form 12 auf, in die ein thermisch konditionierter Vorformling eingelegt werden kann. In dem Beispiel gemäß Figur 1 ist die Vorrichtung 10 als Rotationsmaschine mit einem Blasrad dargestellt und weist eine Vielzahl von Formen 12 auf, sodass sie in schneller Folge eine Vielzahl von Behältern aus Vorformlingen Ausformen kann.

Die Form 12 weist einen Hohlraum auf, der die äußere Gestalt eines herzustellenden Behälters aufweist. Die Form 12 umfasst weiter eine Bodenform 18, die den Boden des Behälters in dem Hohlraum ausformt. Der Hohlraum kann Entlüftungsauslässe aufweisen (nicht dargestellt), die in die Umgebung münden. Luft, die aus dem Hohlraum bei der Expansion eines Vorformlings verdrängt wird, kann über die Entlüftungsauslässe aus dem Hohlraum entweichen.

In die Form 12 kann eine Reckstange 14 eingeführt werden. Wenn die Reckstange 14 in die Form 12 eingeführt wird und ein Vorformling in der Form 12 eingelegt ist, reckt die Reckstange 14 den Vorformling entlang seiner Längsachse bis in den Bereich der Bodenform 18. Das Recken wird durch die thermische Konditionierung des thermoplastischen Materials des Vorformlings unterstützt.

Mittels einer Fluidleitung 16 kann ein Blasgas in den in die Form 12 eingelegten Vorformling eingeleitet werden. Dies bewirkt Druckerhöhung innerhalb des Vorformlings. Durch die Druckerhöhung wird der Vorformling unter anderem auch in radialer Richtung zur Längsachse gereckt und an die Wände des Hohlraums der Form 12 gepresst. Der Vorformling weist nun die Gestalt des herzustellenden Behälters auf.

Das Material des Behälters weist noch Restwärme aus der thermischen Konditionierung auf. Die Restwärme kann durch eine Kühleinheit 20 reduziert werden.

Figur 2 stellt eine Querschnittsdarstellung der Form 12 mit der Kühleinheit 20 dar. Der Vorformling ist dabei bereits zu einem Behälter 34 ausgeformt und die Reckstange 14 noch in der Form 12 angeordnet. Das Blasgas wurde über die Fluidleitung 16 und eine Leitung 24 durch ein Blasgasventil 22 in den Vorformling eingeführt. Bevorzugt wird das Blasgas seitlich an der Reckstange 14 vorbei in den Vorformling eingelassen. Über ein Ablassventil 36 kann das unter Druck stehende Blasgas durch eine Ablassöffnung 38 aus dem hergestellten Behälter 34 ausgelassen werden, um den Druck in dem Behälter 34 zu reduzieren.

Zu Beginn der Reduktion des Druckes in dem Behälter 34 bzw. nach einer vordefinierten Zeitspanne danach wird der Boden 30 des Behälters 34 mittels der Kühleinheit 20 gekühlt. Die Kühleinheit 20 ist an der Reckstange 14 angeordnet. Die Kühleinheit 20 kann in diesem Beispiel mindestens einen Auslass 28 aufweisen, der vorliegend an einem in dem Behälter 34 angeordneten Endstück der Reckstange 14 angeordnet ist.

Weiter kann die Reckstange 14 mindestens einen Einlass 32 aufweisen, der fluidkommunizieren mit einem Spülgasventil 26 verbunden ist, wenn die Reckstange 14 in die Form 12 eingeführt ist. Wenn das Spülgasventil 26 geöffnet wird, fließt Spülgas durch den mindestens Einlass 32 und durch die Reckstange 14 zu den mindestens einen Auslass 28.

Das Spülgasventil 26 kann dabei über eine Leitung 24 mit der Fluidleitung 16 fluidkommunizierend verbunden sein, sodass das Blasgas als Spülgas verwendet wird.

Der mindestens eine Auslass 28 ist derart angeordnet, dass er auf den Boden 30 gerichtet ist und kann als Expansionsdüse ausgebildet sein. Aus dem mindestens einen Auslass 28 wird das Spülgas mittels einer Vielzahl von Spülgaspulsen auf den Boden 30 eingeleitet, um den Boden 30 zu kühlen. Die Spülgaspulse sind getaktet, sodass über die gesamte Zeitdauer der Kühlung kein kontinuierlicher Spülgasstrom durch den mindestens einen Auslass 28 auf den Boden 30 eingeleitet wird. Die Kühlung erfolgt dabei in der Hauptsache durch die Expansion des Spülgases nach dem Austreten aus dem Auslass 28. Dabei erfolgt eine adiabatische Expansion des Spülgases, bei der das Spülgas abkühlt. Das abgekühlte Spülgas trifft dann auf den Boden 30 des Behälters 34 und kann die Restwärme an dem Boden 30 des Behälters 34 aufnehmen.

Bei jedem Spülgaspuls wird der Druck in dem Behälter 34 zunächst erhöht und fällt nach dem Ende des Spülgaspulses wieder ab. Dazu kann zum Beispiel das Ablassventil 36 während der gesamten Zeitdauer der Kühlung geöffnet bleiben, um einen Druckausgleich über die Ablassöffnung 38 zu bewirken.

Weiter ist die Taktung der Spülgaspulse derart ausgebildet, dass ein Spülgaspuls erst dann begonnen wird, wenn nach dem vorherigen Spülgaspuls ein Druckausgleich stattgefunden hat. Mit Beginn jedes Spülgaspulses wird damit ein für diese Randbedingungen maximal möglicher Druckdifferenz zwischen dem Druck des Spülgases und dem Inhalt des Behälters 34 bewirkt. Dies hat zur Folge, dass die Expansion des Spülgases maximiert wird und damit eine maximale Kühlwirkung bewirkt wird.

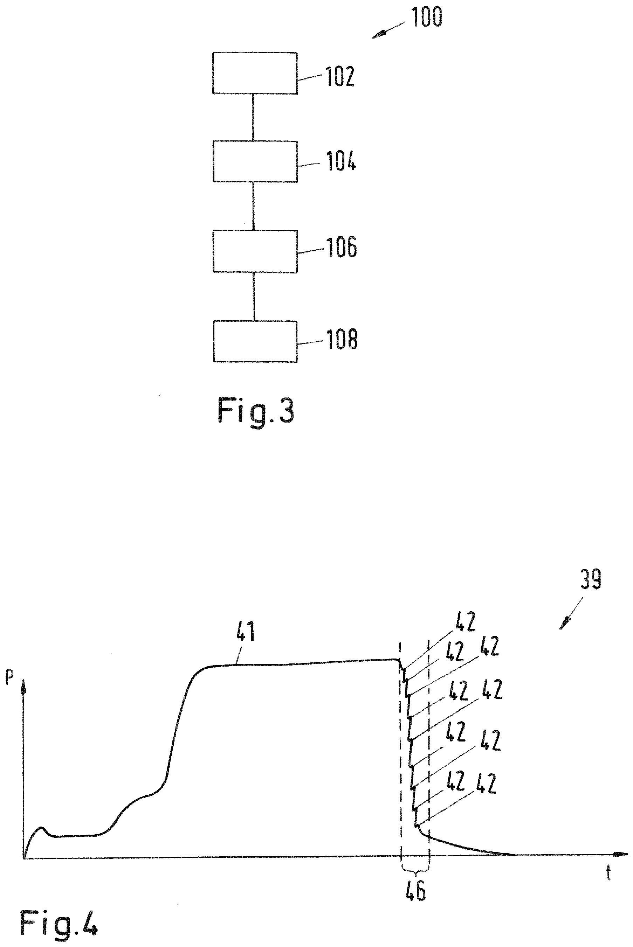

Im Folgenden wird das Verfahren zum Herstellen eines Behälters näher erläutert, das in seiner Gesamtheit mit dem Bezugszeichen 100 bezeichnet wird, wie in Figur 3 dargestellt.

Mit dem Verfahren 100 werden Behälter aus thermoplastischem Material durch die Umformung von thermisch konditionierten Vorformlingen hergestellt. Das Verfahren 100 kann optional mittels einer oben beschriebenen Vorrichtung 10 durchgeführt werden.

In einem ersten Schritt 102 des Verfahrens 100 wird ein thermisch konditionierter Vorformling aus thermoplastischem Material in einer Form angeordnet. Dies kann z. B. mittels eines Übergaberades erfolgen, das einer Formeinheit einen Vorformling zur Verfügung stellt.

In einem weiteren Schritt 104 wird der Vorformling mittels einer Reckstange entlang seiner Längsachse und mittels eines Blasgases in radialer Richtung zur Längsachse gereckt. Dabei wird der Vorformling an die Innenwände der Form gepresst und weist dann die Gestalt des herzustellenden Behälters auf. Durch die thermische Konditionierung des verwendeten Vorformlings weist der hergestellte Behälter noch Restwärme auf.

Um diese Restwärme zumindest am Boden des Behälters abzuführen, wird in einem weiteren Schritt 106 der Boden des Behälters mittels eines Spülgases gekühlt. Die Kühlung kann dabei von einer Kühleinheit durchgeführt werden. Weiter wird die Kühlung nach der Reduktion des Drucks, der durch das Blasgas in dem hergestellten Behälter erzeugt wurde bzw. nach einer vordefinierten Zeitdauer nach dem Beginn der Reduktion des Drucks durchgeführt.

Das Spülgas wird dabei unter Druck durch mindestens einen Auslass in Richtung des Bodens des Behälters geleitet. Der mindestens eine Auslass ist dabei auf den Boden gerichtet und kann an einem in der Form angeordneten Endstück der Reckstange angeordnet sein. D.h., dass das Spülgas durch die Reckstange geleitet wird. Das Spülgas kann dabei Blasgas sein, d.h. das Spülgas kann durch eine Druckquelle bereitgestellt werden, die auch das Blasgas bereitstellt.

Beim Austritt aus dem Auslass expandiert das Spülgas, wobei seine Temperatur reduziert wird. Auf diese Weise wird Spülgas mit einer geringen Temperatur auf den Boden geleitet, sodass der Boden gekühlt wird.

Die Einleitung des Spülgases erfolgt mittels einer Vielzahl von getakteten Spülgaspulsen.

In Figur 4 wird der Druckverlauf 41 während des Reckens des Vorformlings dargestellt. Die Hochachse bezeichnet dabei den Druck in dem Vorformling bzw. Behälter und die Rechtsachse die Zeit.

Die Reduktion des Drucks in dem hergestellten Behälter erfolgt im Intervall 46 und kann auch als Entspannungsphase bezeichnet werden. In dieser Entspannungsphase wird das Spülgas mit einer Vielzahl von getakteten Spülgaspulsen auf den Boden geleitet. Damit erfolgt die Einleitung der getakteten Spülgaspulse bei kontinuierlich abfallendem Druck in dem Behälter.

Die Entspannungsphase kann zwischen 0,05 s bis 0,2 s dauern. Die Vielzahl der Spülgaspulse wird innerhalb dieses Zeitraums in den Behälter eingeleitet. Die Pulsdauer kann daher zwischen 5 ms und 100 ms betragen.

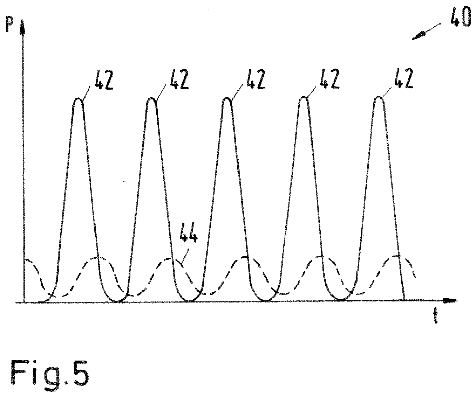

Zur näheren Erläuterung der Taktung wird auf die Figur 5 verwiesen. Figur 5 zeigt dazu ein Diagramm 40, auf dem der Druck über der Zeit aufgetragen ist. Dargestellt ist eine Vielzahl von Druckpulsen 42, die nacheinander mit zeitlichem Abstand zueinander erzeugt werden. Die gestrichelt dargestellte Kurve 44 zeigt schematisch den Flaschendruck an. Während ein Druckpuls 42 erzeugt wird, steigt der Flaschendruck an. Nach dem Ende des Druckpulses 42 sinkt der Flaschendruck wieder, wenn eine Entlüftung des Behälters durchgeführt wird. Sobald der Flaschendruck 44 reduziert wurde, wird der nächste Druckpuls 42 erzeugt. Beim Einleiten des Spülgases in den Behälter mittels des Druckpulses 42 wird daher eine maximale Druckdifferenz zwischen dem Flaschendruck und den Druck des Spülgases bereitgestellt. Dies bewirkt eine maximale Kühlwirkung des Spülgases.

### Bezugszeichenliste

- 10: Vorrichtung zum Herstellen von Behältern
- 12: Form
- 14: Reckstange
- 16: Fluidleitung
- 18: Bodenform
- 20: Kühleinheit
- 22: Blasgasventil
- 24: Leitung
- 26: Spülgasventil
- 28: Auslass
- 30: Boden
- 32: Einlass
- 34: Behälter
- 36: Ablassventil
- 38: Ablassöffnung
- 40: Druck-Zeit-Diagramm
- 41: Druckverlaug
- 42: Druckpuls
- 44: Flaschendruck
- 46: Entspannungsphase

## Patentansprüche

1. Verfahren zum Herstellen von Behältern aus thermisch konditionierten Vorformlingen aus thermoplastischem Material, wobei ein Vorformling in einer Form angeordnet (102) wird, mittels einer Reckstange und eines Blasgases, das in den Vorformling eingeleitet wird, gereckt (104) wird, wobei nach dem Formen des Behälters sowie mit Beginn einer Reduktion des Drucks und/oder nach einer vordefinierten Zeitdauer nach dem Beginn der Reduktion des Drucks des im Behälter angeordneten Blasgases ein Boden des Behälters mittels eines Spülgases gekühlt (106) wird, **dadurch gekennzeichnet, dass** das Spülgas mit einer Vielzahl von getakteten Spülgaspulsen bei kontinuierlich abfallendem Druck in dem Behälter auf den Boden geleitet wird.

2. Verfahren nach Anspruch 1, **dadurch gekennzeichnet, dass** das Spülgas unter Druck durch mindestens einen Auslass geleitet wird, der auf den Boden gerichtet ist.

3. Verfahren nach Anspruch 1 oder 2, **dadurch gekennzeichnet, dass** das Spülgas das Blasgas ist.

4. Verfahren nach einem der Ansprüche 1 bis 3, **dadurch gekennzeichnet, dass** die Reckstange den mindestens einen Auslass aufweist und das Spülgas durch die Reckstange in den Behälter geleitet wird.

5. Vorrichtung zum Herstellen von Behältern aus thermisch konditionierten Vorformlingen aus thermoplastischem Material, wobei die Vorrichtung (10) mindestens eine Form (12) zum Formen des Behälters aus einem Vorformling, mindestens eine in die Form (12) einführbare Reckstange(14) zum Recken eines in die Form (12) eingelegten Vorformlings, eine in den in der Form (12) angeordneten Vorformling mündende Fluidleitung (16) zum Einleiten eines Blasgases in den Vorformling und eine Kühleinheit (20) zum Kühlen eines Bodens (30) eines hergestellten Behälters (34) mittels eines Spülgases mit Beginn einer Reduktion des Drucks und/oder nach einer vordefinierten Zeitdauer nach dem Beginn der Reduktion des Drucks des im Behälter (34) angeordneten Blasgases aufweist, **dadurch gekennzeichnet, dass** die Kühleinheit (20) zum Einleiten des Spülgases bei kontinuierlich abfallendem Druck in dem Behälter auf den Boden (30) mittels einer Vielzahl von getakteten Spülgaspulsen ausgebildet ist.

6. Vorrichtung nach Anspruch 5, **dadurch gekennzeichnet, dass** die Kühleinheit (20) mindestens einen an der Form (12) angeordneten Auslass (28) für das Spülgas aufweist, der auf den Boden (30) gerichtet ist.

7. Vorrichtung nach Anspruch 5 oder 6, **dadurch gekennzeichnet, dass** das Spülgas das Blasgas ist.

8. Vorrichtung nach einem der Ansprüche 5 bis 7, **dadurch gekennzeichnet, dass** die Reckstange (14) den mindestens einen Auslass (28) aufweist und das Spülgas durch die Reckstange (14) in den Behälter (34) geleitet wird.

## Claims

1. Method for producing containers from thermally conditioned preforms of thermoplastic material, wherein a preform is arranged (102) in a mould, is stretched (104) by a stretching rod and a blowing gas which is introduced into the preform, wherein after the forming of the container and with the start of a reduction of the pressure and/or after a predefined period of time after the start of the reduction of the pressure of the blowing gas arranged in the container, a base of the container is cooled (106) by a purging gas, **characterised in that** the purging gas is directed onto the base with a plurality of pulsed purging gas pulses at continuously decreasing pressure in the container.

2. Method according to claim 1, **characterised in that** the purging gas is passed under pressure through at least one outlet which is directed towards the floor.

3. Method according to claim 1 or 2, **characterised in that** the purging gas is the blowing gas.

4. Method according to one of claims 1 to 3, **characterised in that** the stretching rod has the at least one outlet and the purging gas is passed through the stretching rod into the container.

5. Device for producing containers from thermally conditioned preforms of thermoplastic material, the apparatus (10) comprising at least one mould (12) for forming the container from a preform, at least one stretching rod (14) which can be introduced into the mould (12) for stretching a preform inserted into the mould (12), a fluid line (16) opening into the preform arranged in the mould (12) for introducing a blowing gas into the preform, and a cooling unit (20) for cooling a base (30) of a manufactured container (34) by a purging gas with the start of a reduction in pressure and/or after a predefined period of time after the start of the reduction in pressure of the blowing gas arranged in the container (34), **characterised in that** the cooling unit (20) is designed to introduce the purging gas onto the base (30) with a continuously falling pressure in the container by means of a plurality of pulsed purging gas pulses.

6. Device according to claim 5, **characterised in that** the cooling unit (20) has at least one outlet (28) arranged on the mould (12) for the purging gas, which outlet is directed towards the base (30).

7. Device according to claim 5 or 6, **characterised in that** the purging gas is the blowing gas.

8. Device according to one of claims 5 to 7, **characterised in that** the stretching rod (14) has the at least one outlet (28) and the purging gas is guided through the stretching rod (14) into the container (34).

## Revendications

1. Procédé de fabrication de récipients à partir de préformes conditionnées thermiquement en matériau thermoplastique, dans lequel une préforme est placée (102) dans un moule, est étirée (104) au moyen d'une barre d'étirage et d'un gaz de soufflage qui est introduit dans la préforme, dans lequel, après le moulage du récipient ainsi qu'avec le début d'une réduction de la pression et/ou après une période de temps prédéfinie après le début de la réduction de la pression du gaz de soufflage disposé dans le récipient, un fond du récipient est refroidi (106) au moyen d'un gaz de rinçage, **caractérisé en ce que** le gaz de rinçage est dirigé sur le fond avec une pluralité d'impulsions de gaz de rinçage cadencées avec une pression diminuant de manière continue dans le récipient.

2. Procédé selon la revendication 1, **caractérisé en ce que** le gaz de rinçage est envoyé sous pression à travers au moins une sortie qui est dirigée vers le fond.

3. Procédé selon la revendication 1 ou 2, **caractérisé en ce que** le gaz de rinçage est le gaz de soufflage.

4. Procédé selon l'une quelconque des revendications 1 à 3, **caractérisé en ce que** la barre d'étirage comprend ladite au moins une sortie et **en ce que** le gaz de rinçage est dirigé à travers la barre d'étirage dans le récipient.

5. Dispositif pour fabriquer des récipients à partir de préformes conditionnées thermiquement en matériau thermoplastique, le dispositif (10) comprenant au moins un moule (12) pour former le récipient à partir d'une préforme, au moins une barre d'étirage (14) pouvant être introduite dans le moule (12) pour étirer une préforme placée dans le moule (12), une conduite de fluide (16) débouchant dans la préforme placée dans le moule (12) pour introduire un gaz de soufflage dans la préforme et une unité de refroidissement (20) pour refroidir un fond (30) d'un récipient fabriqué (34) au moyen d'un gaz de rinçage avec le début d'une réduction de la pression et/ou après une période de temps prédéfinie après le début de la réduction de la pression du gaz de soufflage placé dans le récipient (34), **caractérisé en ce que** l'unité de refroidissement (20) est conçue pour introduire le gaz de rinçage sur le fond (30) à une pression continuellement décroissante dans le récipient au moyen d'une pluralité de pulsations de gaz de rinçage synchronisées.

6. Dispositif selon la revendication 5, **caractérisé en ce que** l'unité de refroidissement (20) comporte au moins une sortie (28) pour le gaz de rinçage, disposée sur le moule (12) et dirigée vers le fond (30).

7. Dispositif selon la revendication 5 ou 6, **caractérisé en ce que** le gaz de rinçage est le gaz de soufflage.

8. Dispositif selon l'une quelconque des revendications 5 à 7, **caractérisé en ce que** la barre d'étirage (14) comprend ladite au moins une sortie (28) et **en ce que** le gaz de rinçage est dirigé à travers la barre d'étirage (14) dans le réservoir (34).
